Europäisches Patentamt

**(19)** European Patent Office

Office européen des brevets

(11) Publication number : **0 195 720 B1**

# (12) EUROPEAN PATENT SPECIFICATION

(45) Date of publication of patent specification :
**05.02.92 Bulletin 92/06**

(51) Int. Cl.⁵ : **G11B 7/24**

(21) Application number : **86400577.2**

(22) Date of filing : **19.03.86**

(54) **Ventilation arrangement for use in an optical recording disc.**

(30) Priority : **20.03.85 JP 54135/85**
**19.11.85 JP 257856/85**
**04.02.86 JP 21195/86**

(43) Date of publication of application :
**24.09.86 Bulletin 86/39**

(45) Publication of the grant of the patent :
**05.02.92 Bulletin 92/06**

(84) Designated Contracting States :
**FR NL**

(56) References cited :
**EP-A- 0 086 065**
**EP-A- 0 109 245**
**GB-A- 2 080 598**
**US-A- 4 074 282**
**PATENT ABSTRACTS OF JAPAN, vol. 9, no. 37**
**(P-335)[1760] 16th February 1985; & JP - A - 59**
**177 732 (TDK) 08-10-1984**

(56) References cited :
**PATENT ABSTRACTS OF JAPAN, vol. 9, no. 26**
**(P-332)[1749], 5th February 1985; & JP - A - 59**
**171 049 (HITACHI) 27-09-1984 (Cat. D)**
**PATENT ABSTRACTS OF JAPAN, vol. 3, no.**
**129, page 63 E 147, 26th October 1979; & JP - A**
**- 54 106 204 (MATSUSHITA) 21-08-1979 (Cat. D)**

(73) Proprietor : **Hitachi Maxell Ltd.**
**No 1-1-88, Ushitora Ibaraki-shi**
**Osaka-fu (JP)**

(72) Inventor : **Sugiyama, Toshinori**
**1296-1 Aza-tanaka Tsukubamachi**
**Tsukuba-gun Ibaragi (JP)**
Inventor : **Shimizu, Mitsuru**
**3-34-3-204, Togashira**
**Torite-shi Ibaragi (JP)**

(74) Representative : **Descourtieux, Philippe et al**
**CABINET BEAU de LOMENIE 55 rue**
**d'Amsterdam**
**F-75008 Paris (FR)**

## Description

The present invention relates to an optical disc comprising:

two disc substrates each in a cylindrical shape having a round centre hole,

at least one recording layer formed on the inner surface of at least one of said disc substrates,

an annular shaped inner spacer or inner rim portion and an annular shaped outer spacer or outer rim portion located between the inner rims and the outer rims respectively of said two disc substrates,

at least one bonding material layer formed either at an inner spacer or inner rim portion and/or an outer spacer or outer rim portion in front of the inner surface of said disc substrate, or at the inner surface of said disc substrates, whereby said bonding material layer is provided to bond the said two disc substrates either together or to the corresponding inner and outer spacers so that the inner surfaces of said disc substrates face each other and together with said inner and outer spacers delimit an inner chamber, and

a plurality of ventilation paths provided between said two disc substrates and establishing communication between the outside and the inner chamber of said optical recording disc.

In general, an optical recording disc has a well known sandwich construction, that is, in the optical recording disc, a pair of disc substrates are bonded together by an inner spacer and an outer spacer, so that each of the recording layers of a pair of disc substrates, which is formed on the surface of the disc substrate, faces the other recording layer. In the optical recording disc, a space, hereinafter called "the air chamber", is formed between the recording layers of both disc substrates, and is isolated from the outside of the optical recording disc.

The optical recording disc comprising the isolated air chamber can prevent an alien substance such as dust particles etc. from adhering to the recording layer of the disc substrate, because the substance cannot enter the air chamber, thereby information can be recorded correctly on the recording layer. However, in the aforementioned optical recording disc, if the environmental condition of the optical recording disc such as the temperature or the atmospheric pressure changes, there will be a pressure difference between the air chamber and the outside of the optical recording disc, and it will be difficult to track and focus on a predetermined tracking line of the recording layer. Moreover, the disc substrate may break when the shape of the disc substrate changes.

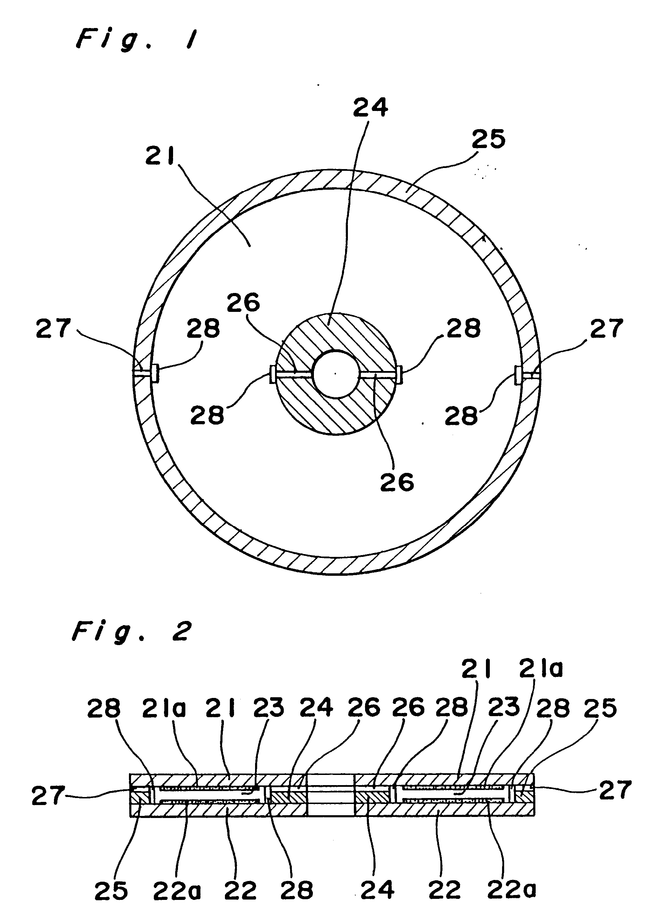

In order to prevent the disc substrate from breaking and to prevent the shape of the disc substrate from changing, as shown in Figures 1 and 2, an optical recording disc of the type mentioned hereinabove was proposed in the Japanese patent provisional publications Nos. 106204/1979 and 171049/1984, wherein the ventilation path was provided to make the air pass from the inside air chamber to the outside of the optical recording disc and inversely.

In the known optical recording disc, an air chamber is provided between a pair of recording layers 21a and 22a formed on the surfaces of disc substrates 21 and 22, a ventilation path 26 is formed between the surface of disc substrate 21 and the surface of an annular shaped inner spacer 24, and a ventilation path 27 is formed between the surface of disc substrate 21 and the surface of an annular shaped outer spacer 25. In this manner is formed a passage which extends from the air chamber through the ventilation paths 26 and 27 to the outside of the optical recording disc. There are also provided filters 28, for preventing an alien substance such as dust particles etc. from entering the air chamber, at the place where the ventilation paths 26 and 27 are located, on the outer wall surface of the inner spacer 24 as well as on the inner wall surface of the outer spacer 25. There will be no pressure difference between the inside air chamber and the outside of the optical recording disc, even if the environment condition around the optical recording disc such as the temperature or the atmospheric pressure etc. changes, because the air in excess inside the air chamber can pass through the ventilation paths 26 and 27 to the outside of the optical recording disc and reversely. This optical recording disc can overcome the aforementioned problems when the environment condition changes, and can prevent alien substances such as dust particles etc. from entering the inner air chamber and information can be recorded correctly on the recording layers 21a and 22a, because the alien substance is filtered.

However, the conventional ventilation type optical recording disc comprising filters 28 has the disadvantage of an increased number of assembling members and of manufacturing steps compared to the ones of a ventilation type optical recording disc without any filter 28, and also has the disadvantage that it is difficult to handle the very small filters 28. Therefore, the optical recording disc comprising filters 28 increases the manufacturing cost of optical recording discs. Moreover, the filters 28 are easily taken off from the wall surface of the inner and outer spacers 24 and 25 by the centrifugal force generated by the rotation of the optical recording disc, and by the air strong flow due to large pressure differences or large temperature differences between the inner air chamber and the outside of the optical recording disc. Under these conditions, the recording layers 21a and 22a are easily damaged by the filters 28 and alien substances such as dust particles etc., can enter from the outside of the optical recording disc through the ventilation paths 26 and 27 into the inner air chamber.

US-A patent 4 074 282 shows a similar ventilated optical recording disc having no filters and comprising at least two coaxially arranged discs spaced from each other by two coaxial resilient ring-shaped seals or spacers so as to provide an enclosure or air chamber between said two discs and said two ring-shaped spacers. At least one of the coaxially arranged discs is provided at its inner side with a recording layer. One or more ventilation apertures are formed in the ring-shaped spacers to adjust the internal pressure caused in the air chamber when the recording disc is rotated at high speed. The ring-shaped spacers are bonded to the adjacent disc parts by means of cement, glue or any other appropriate adhesive material applied to the mating surfaces. As soon as the rotation of the recording disc is stopped, the air flow is reversed and dust paricles are sucked into the enclosure or air chamber and deposited on the recording layer whereby any subsequent reading thereof may be jammed.

An essential object of the present invention is to provide an optical recording disc which can overcome the aforementioned problems, that is, to provide an optical recording disc which enables to record information correctly on a recording layer formed on the surface of the disc substrate, whereby alien substances such as dust particles etc. neither enter the inside air chamber of the optical recording disc, nor adhere to the recording layer, and whereby the shape of the optical recording disc cannot be changed and the optical recording disc cannot be broken, even if the environment condition such as the temperature or the atmospheric pressure changes.

According to the present invention, this aim is attained in an optical recording disc of the type initially mentioned by the facts that the ventilation paths are formed at predetermined intervals by leaving gaps in the bonding material and in that the thickness of said ventilation paths is in the range of 0.5 to 20 $\mu$m.

In the optical recording disc according to the present invention, the said ventilation paths prevent the disc substrate from changing shape and from breaking, even if there exists a pressure difference between the inside air chamber and the outside of the optical recording disc. The optical recording disc according to the present invention fulfils a filtering function, without comprising any filter member. Therefore, the recording layer of the disc substrate cannot be damaged by any filter member.

Moreover, the optical recording disc according to the present invention needs a smaller number of pieces and a smaller number of manufacturing steps than the ones required for a conventional ventilation type optical recording disc comprising filter members. Consequently, the optical recording disc according to the present invention decreases the manufacturing cost as compared with that of the conventional ventilation type optical recording disc.

Figure 1 is a plane view of an inner spacer and an outer spacer of a conventional ventilation type optical recording disc,

Figure 2 shows a radial vertical section of the conventional type of optical recording disc comprising the inner spacer and the outer spacer shown in Figure 1,

Figure 3 shows a radial vertical section of a first preferred embodiment of an optical recording disc according to the present invention,

Figure 4 is a plane view of an inner spacer and an outer spacer of the optical recording disc shown in Figure 3,

Figure 5 is a partial radial vertical section of the outer spacer along line of I - I' shown in Figure 4,

Figure 6 is a plane view of an inner spacer and an outer spacer of second preferred embodiment of an optical recording disc according to the present invention,

Figure 7 is a partial vertical section of the optical recording disc along peripheral line of II - II' shown in Figure 6,

Figure 8 shows a radial vertical section of a third preferred embodiment of an optical recording disc according to the present invention,

Figure 9 is an enlarged view of the inner spacer shown in Figure 8,

Figure 10 is a partial and enlarged, sectional view of the ventilation paths shown in Figure 8,

Figure 11 shows a radial vertical section of a fourth preferred embodiment of an optical recording disc according to the present invention,

Figure 12 is a radial vertical section of one part of the optical recording disc shown in Figure 11,

Figure 13 is a partial and enlarged sectional view of the ventilation paths shown in Figure 11,

Figure 14 is a perspective view of the inner spacer of the first, second, third and fourth preferred embodiments of the optical recording disc showing a first process for coating a surface of the inner spacer with a bonding material,

Figure 15 is a plane view of the surface of the inner spacer coated with bonding material by the process shown in Figure 14,

Figure 16 is a perspective view of the inner spacer of the first, second, third and fourth preferred embodiments of the optical recording disc showing a second process for coating the surface of the inner spacer with a bonding material,

Figure 17 is a perspective view of an inner spacer or an outer spacer comprising a projecting portion,

Figure 18 is an enlarged perspective view of the projecting portion of the inner spacer or the outer spacer shown in Figure 17,

Figure 19 is a perspective view of the inner spacer or the outer spacer shown in Figures 17 and 18 showing a process for coating the surface of the inner spacer or the outer spacer with a bonding material.

Figure 20 is an enlarged sectional view of the optical recording disc comprising the inner spacer or the outer spacer having its surface close to the projecting portion coated with the bonding material by the process shown in Figure 19, and Figure 21 is an enlarged perspective view of another preferred embodiment of a projecting portion of an inner spacer or an outer spacer.

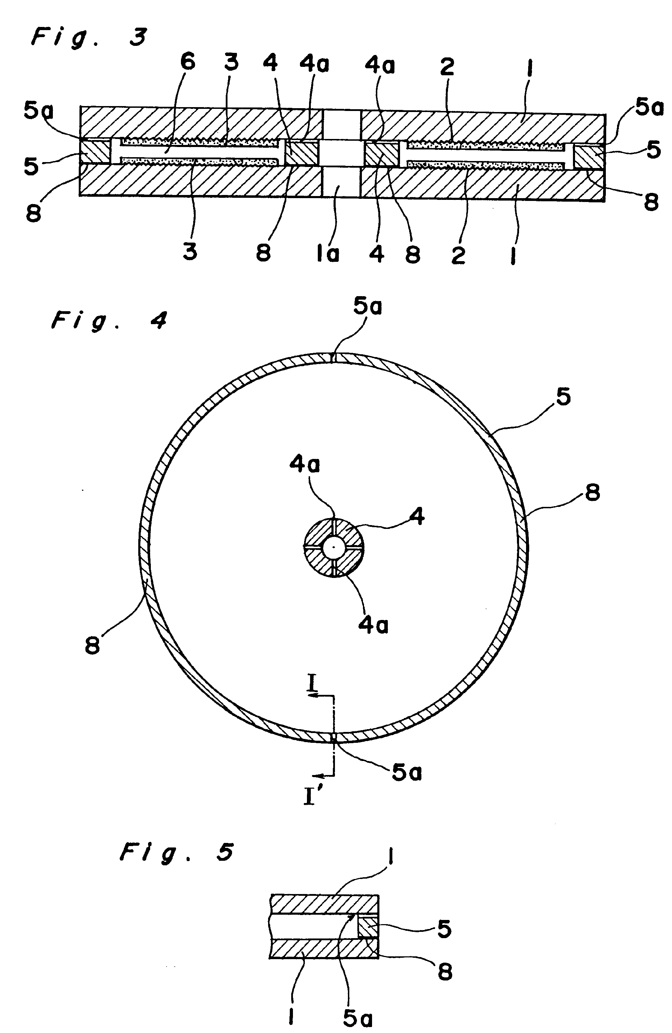

Figure 3 shows a first preferred embodiment of a ventilation type optical recording disc according to the present invention. As shown in Figure 3, there is provided a pair of disc substrates 1 having an annular shape, with a cylindric center hole 1a. Each disc substrate 1 is made of an inorganic material such as glass etc., or a plastic material such as polymethyl meta acrylate, polycarbonate, polymethyl pentane, epoxy resin etc.. An uneven surface 2 is formed on one side of the disc substrate 1 by a known forming process such as the photopolymerization process, the injection process, the compression process, the injection-compression process etc..

A recording layer 3 is deposited on the one side of the disc substrate 1, provided with uneven pattern 2, by a known film forming process such as the sputtering process, the vacuum evaporation process, the ion plating process, the plasma evaporation process, the dip plating process etc... The recording layer 3 is made of a recording material which is suitable to record information on it, such as a recording material responsive to a so called heat mode recording process, or an optical thermal magnetic recording material etc..

An inner spacer 4 and an outer spacer 5 of annular shape having a predetermined inner diameter and a predetermined outer diameter are formed by an injection molding process, a cutting process, or a punching process etc.. In case of an injection molding process, the spacers 4 and 5 are made of a synthetic resin material such as polycarbonate resin, acrylic resin, polymethyl pentane resin, epoxy resin, vinyl chloride resin, or nylon resin etc.. In case of the cutting process or punching process, the spacers 4 and 5 stamped out in annular shape from a sheet material made of the aforementioned synthetic resin. Both upper and lower surfaces of the spacers 4 and 5 are flat, and one of said surfaces of the inner spacer 4 and of the outer spacer 5 is coated with a bonding material 8 but several portions or gaps 4a and 5a are left free from that bonding material 8, as shown in Figure 4.

As shown in Figure 3, the optical recording disc comprises a pair of disc substrates 1 bonded together by means of the inner spacer 4 and the outer spacer 5, so that each recording layer 3 provided on a disc substrate 1 of a pair of disc substrates 1 faces the other recording layer 3. In the optical recording disc, an inner air chamber 6 is formed between the recording layers 3 of both disc substrates 1, and is isolated from the outside of the optical recording disc.

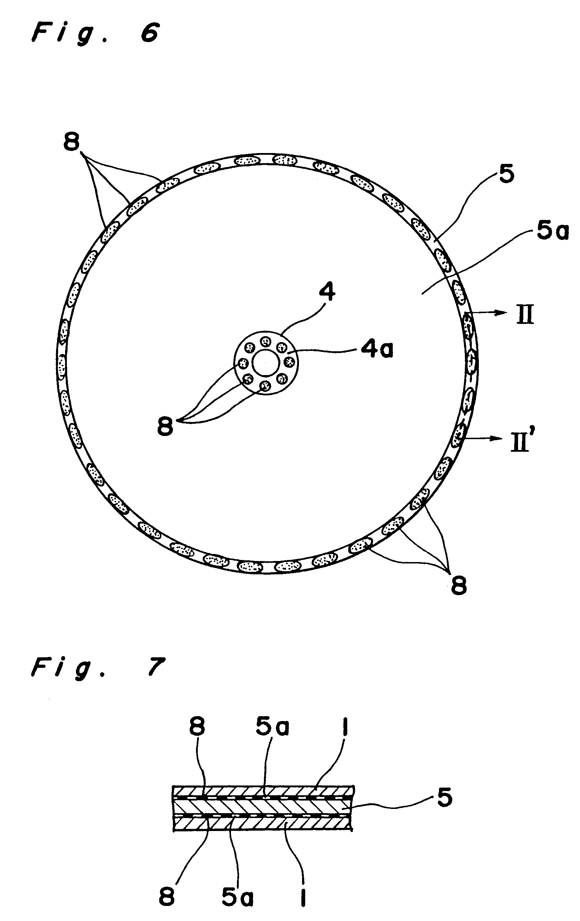

Figure 5 shows a partial vertical sectional view of the outer spacer 5 on a long line I - I' in Figure 4. As shown in Figure 5, several portions 5a of the upper surface of the outer spacer 5, are not coated with bonding material 8 so that on each portion 5a of said surface, there exists a gap which is left in the bonding material 8 and extends from the inner rim to the outer rim of said outer spacer 5 and defines a ventilation path 5a, through which the air in the inside air chamber 6 between both disc substrates 1 can pass towards the outside of the recording disc and reversely.

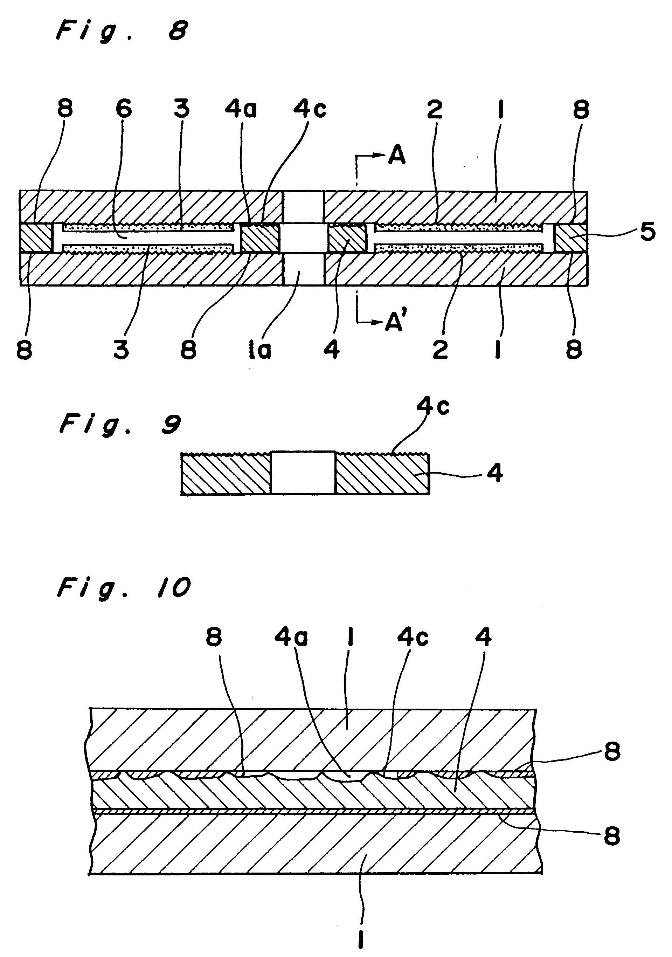

Figure 6 shows a second preferred embodiment of the inner spacer 4 and the outer spacer 5 of the optical recording disc according to the present invention. In Figure 6, the bonding material 8 may be applied to at least one surface of the inner spacer 4 and the outer spacer 5 according to a spot pattern comprising a number of spots of circular or elliptic shape and spaced from each other at predetermined intervals or gaps left in the bonding material 8. In this manner, portions or gaps 4a and 5a not coated with bonding material 8, are formed on the surface of spacers 4 and 5 thereby providing a plurality of ventilation paths 4a and 5a. Consequently, the ventilation air flow of the optical recording disc shown in Figure 6 is higher than the one of the optical recording disc shown in Figure 3. The optical recording disc shown in Figure 6 can be used in practice use, although the ventilation air flow per a ventilation path 4a or 5a as shown in Figure 6 is smaller than the air flow passing through a ventilation path 4a or 5a as shown in Figure 3.

Figure 7 is a partial vertical sectional view of the outer spacer 5 along peripheral line II - II' of Figure 6. In Figure 7, the optical recording disc comprises a plurality of ventilation paths 5a formed by gaps between several spots of bonding material 8, located between the disc substrate 1 and the outer spacer 5, the ventilation paths 5a being thereby formed at predetermined intervals between adjacent spots. By this means, air in the inside air chamber 6 and air surrounding the outside of the optical recording disc can pass through the ventilation paths 5a.

The ventilation paths 4a and 5a are preferably formed so that the bigger their number, the smaller their width can be. The width of the ventilation paths 4a and 5a is more particularly in the range of about 3 - 15 mm and preferably is approximately 5 mm. The thickness of the ventilation paths 4a and 5a is similar to the thickness of the bonding material 8, for example, is in the range of 0.5 - 20 $\mu$m. Moreover, the thickness of the ventilation paths 4a and 5a is preferably in the range of 0.5 - 5 $\mu$m in order to prevent alien substances such as dust particles etc. from entering the inner air chamber 6 located between both disc substrates 1, the inner spacer 4 and the outer spacer 5 of the optical recording disc.

The bonding material 8 may be coated on the surface of the spacers 4 and 5 by hand. A mechanical process such as the screen printing process etc may be used to coat uniformly and quickly the upper and lower surfaces of the spacers 4 and 5 with bonding material 8 in the aforementioned pattern comprising a plurality of spots of circular or elliptic shape. Either epoxy resin or ultraviolet rays hardening resin may be used as the bonding material 8.

Figure 8 represents a third preferred embodiment of the optical recording disc according to the present invention, and Figure 9 is a vertical sectional view of the optical recording disc along line of A - A' of Figure 8. In Figure 8, the optical recording disc comprises an inner spacer 4 and an outer spacer 5 of annular shape having a predetermined inner diameter and a predetermined outer diameter, a rough surface 4c being formed on the top surface of the inner spacer 4 as shown in Figure 9, said rough surface having a predetermined roughness taking into accout a sufficient air flow, a dust prevention and a coating process precision as required. If the interval or distance between top points of the rough surface 4c is less than 0.5 μm, the rate of the ventilation air flow passing through the ventilation path 4a is less than $2 \times 10^{-10}$ m3/sec and it is difficult to form a uniformly roughened surface 4c with such a degree of roughness. On the other hand, if the interval or distance between the top points of the rough surface 4c is bigger than 3 μm, dust particles whose length is greater than 3 um can pass through the ventilation path 4a and can adhere to the recording layer 3, thereby rendering difficult any correct recording of information on the recording layer 3. Accordingly, the interval or distance between the top points of the rough surface 4c is preferably in the range of 0.5 - 3 μm. .

The inner air chamber 6 may be formed between both disc substrates 1 and spacer members such as the inner spacer 4 and the outer spacer 5, whose top and bottom faces are coated with the bonding material 8.

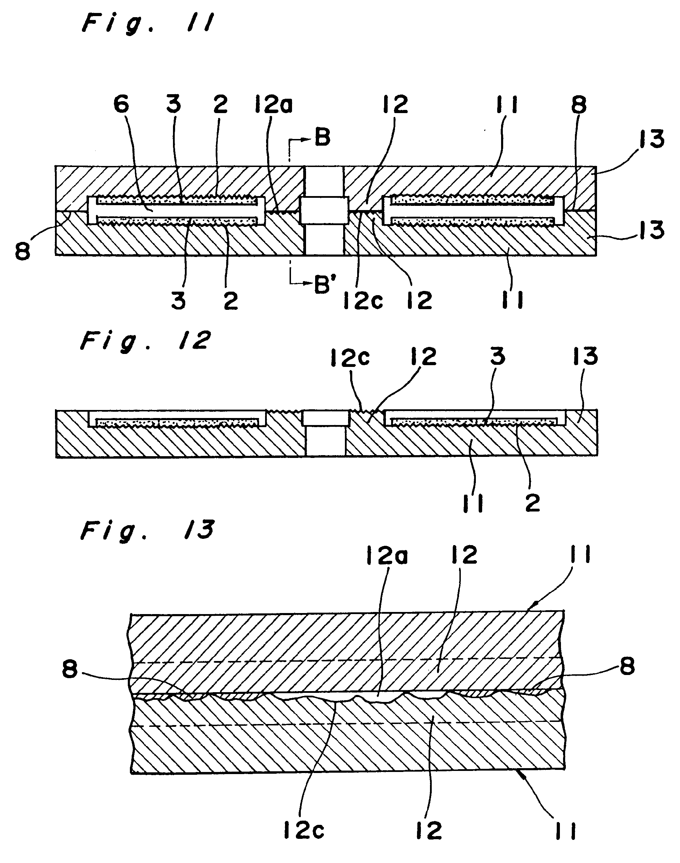

The ventilation paths 4a are formed between the one side of the disc substrate 1 and the rough surface 4c of the inner spacer 4 at small areas, not coated, with bonding material 8 as shown in Figure 10, whereby the outside air of the optical recording disc can pass through the ventilation paths 4a into the inner air chamber 6 and reversely. In other words, the ventilation paths are formed at predetermined intervals by leaving gaps in the bonding material 8. In this case, the dust particles contained in the outside air surrounding the optical recording disc are filtered by the ventilation paths 4a which prevent said dust particles optical recording disc from entering the air chamber 6, since the thickness of each ventilation path 4a is very small such as approximately 0.5 - 3 μm. Therefore, it becomes possible to record information correctly on the recording layer 3 of the optical recording disc.

Figure 11 shows a fourth preferred embodiment of the optical recording disc according to the present invention. A significant feature is to arrange a pair of disc substrates 11, each disc substrate comprising two annular rim portions 12 and 13 respectively located at the inner rim and the outer rim of the disc substrate 11 and projecting from one disc substrate towards the other. The inner annular rim portion 12 is formed as one piece with the disc substrate 11 at its inner rim and the outer annular rim portion 13 is formed as one piece of the disc substrate 11 at its outer rim. In Figure 11, the same reference number is used as the one used in Figure 8 when the member shown in Figure 11 is similar to the one shown in Figure 8. A rough surface 12c is formed on at least one of the surfaces of the inner rim portions 12, projecting from the first disc substrate so as to face the surface of the inner rim portion 12 of the other disc substrate 11. The intervals or distances between neighbouring top points of the rough surface 12c are in the same range as the aforementioned intervals concerning the third preferred embodiment of the optical recording disc of Figure 8, which distances are in the range of approximately 0.5 - 3 μm.

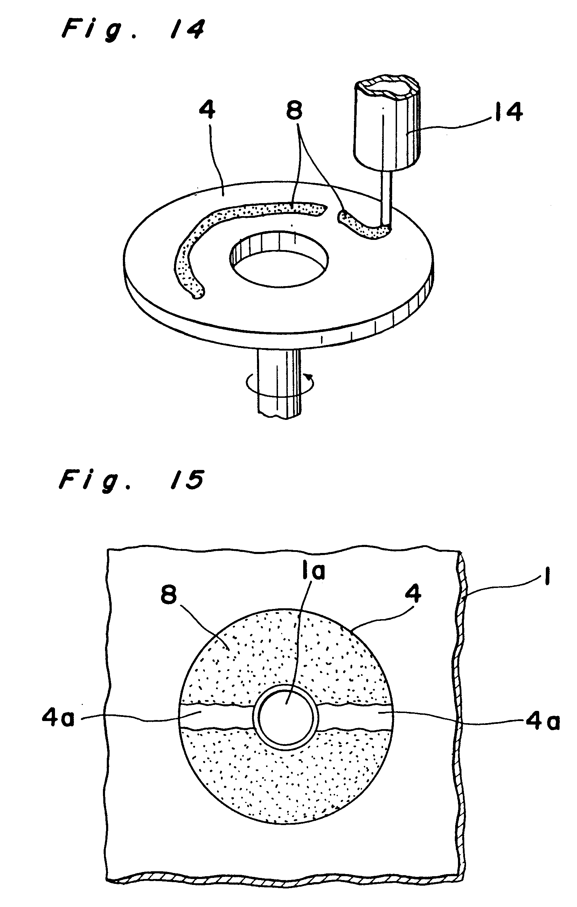

The optical recording disc of the fourth preferred embodiment is assembled so as to form one body by bonding together a pair of disc substrates 11 at the surfaces of the inner and outer rim portions 12 and 13 of a first disc substrate 1 and at the surfaces of the corresponding rim portions 12 and 13 of the second disc substrate 1 whereby at least the surfaces of one pair of rim portions 12, 13 are coated with bonding material 8. Ventilation paths 12a are formed between the roughened surface of the inner rim portion 12 of the first disc substrate 11 and the corresponding surface of the second disc substrate 11 and facing said roughened surface at locations where said roughened surface 12c is not coated with bonding material 8, as shown in Fig. 13.

The fourth preferred embodiment of the optical recording disc has the same function as the one of the third preferred embodiment of the optical recording disc. The inner and outer spacers 4 and 5 as used in the first, second and third preferred embodiments of the optical recording disc can be omitted in the fourth embodiment, since the inner and outer rim portions 12 and 13 are formed as annular projections extending from the inner and outer rims of both disc substrates 11. Thereby, the fourth preferred embodiment of the optical recording disc presents the advantage of being made of a smaller number of members, and of needing a smaller number of manufacturing steps than the first, second and third preferred embodiments.

A preferred embodiment of the manufacturing process of the first preferred embodiment of the optical recording disc will be described below. As shown in Figure 14, the bonding material 8 is deposited in belt or strip shape in a predetermined quantity at a predetermined location on the bonding surface of the inner spacer 4 rotated while the bonding material 8 is supplied by a dispenser 14 to said surface. Then, while the rotating of the inner spacer 4 is continued, the supply of the bonding material 8 is interrupted temporarily, so that gaps serving as ventilation paths 4a are left between portions of bonding material 8 which will take a predetermined width between the spacer 4 and the disc substrate 1 when the bonding material 8 is spread out by pressing the inner spacer 4 onto the surface of the disc substrate 1.

While the bonding material 8 coating the surface of the inner spacer 4 is spread out by pressing the inner spacer 4 with its coated surface against the surface of the disc substrate 1, provided with the recording layer 3, said disc substrate 1 and said inner spacer 4 are bonded together so as to form one body. In this way, very small ventilation paths 4a, whose width is in the range of approximately 0.5 - 3 μm, are formed in the areas between the surface of disc substrate 1 and the surface of the inner spacer 4 not coated with bonding material 8. Then, the outer spacer 5, whose one surface is coated with the bonding material 8, is adhered to the outer rim portion of the disc substrate 1. Finally, after having been coated with bonding material 8, as mentioned above, the other surface of the inner and outer spacers 4 and 5, facing the inner surface of a second disc substrate 1, is bonded to said second disc substrate 1, whereby the manufacturing process of the first preferred embodiment of the optical recording disc is completed.

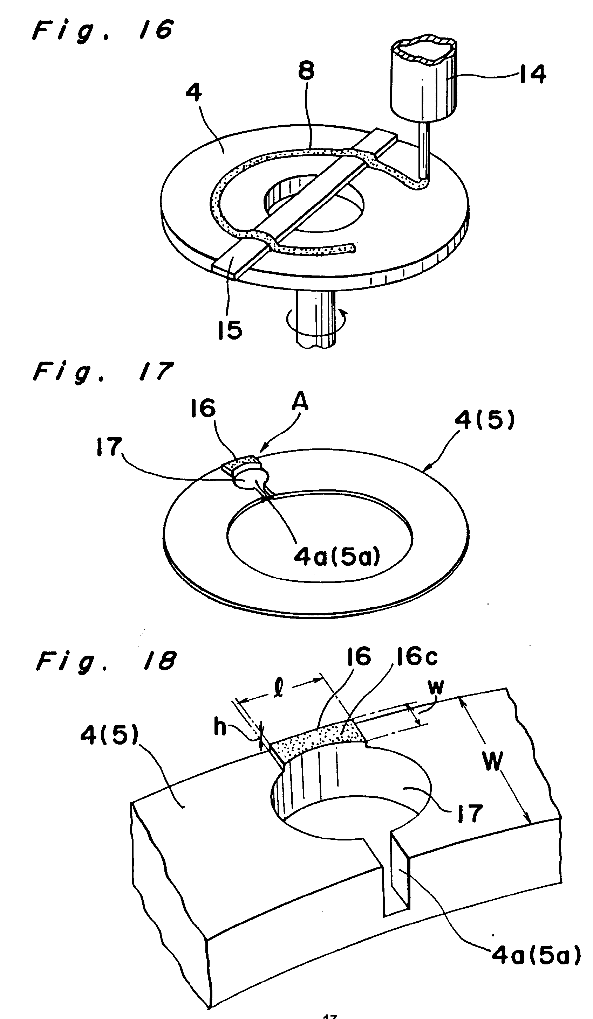

According to the aforementioned manufacturing process of the optical recording disc, a portion of the rough surface 4c is coated with bonding material 8, whereby the quantity of bonding material 8 supplied by the dispenser 14 is controlled. However, an aspect of the present invention is to arrange on the surface of the inner spacer 4, an area which is not coated with the bonding material 8. To this aim, another coating process than the aforementioned coating process may be used. For example, as shown in Figure 16, a mask pattern 15 of rectangular shape is arranged on the rough surface 4c of the inner spacer 4, whereby the length of the mask pattern 15 is approximately the same as the outer diameter of the inner spacer 4 and its width is quite same as the required width of the ventilation path 4a. Then, after the bonding material 8 is deposited so as to form an annular layer or strip on the surface of the inner spacer 4 and the mask pattern 15, the mask pattern 15 is taken off. As a result, an area free of bonding material 8 is formed on the surface of the inner spacer 4. The coating process shown in Figure 16, can also be used for coating the surface of the outer spacer 5, and for leaving some areas thereof free from bonding material 8, thereby forming gaps in the latter.

In the preferred embodiment shown in Figures 14 through 16, two ventilation paths 4a are formed on the inner spacer 4, however, any number of the ventilation paths 4a may be formed on the surface of the inner spacer 4 by taking into account the required air flow rate from the inner air chamber 6 to the outside of the recording disc and reversely.

In the preferred embodiment described above, the bonding material 8 is used as bonding means, however, the other known bonding means may be used, such as the ultrasonic bonding process.

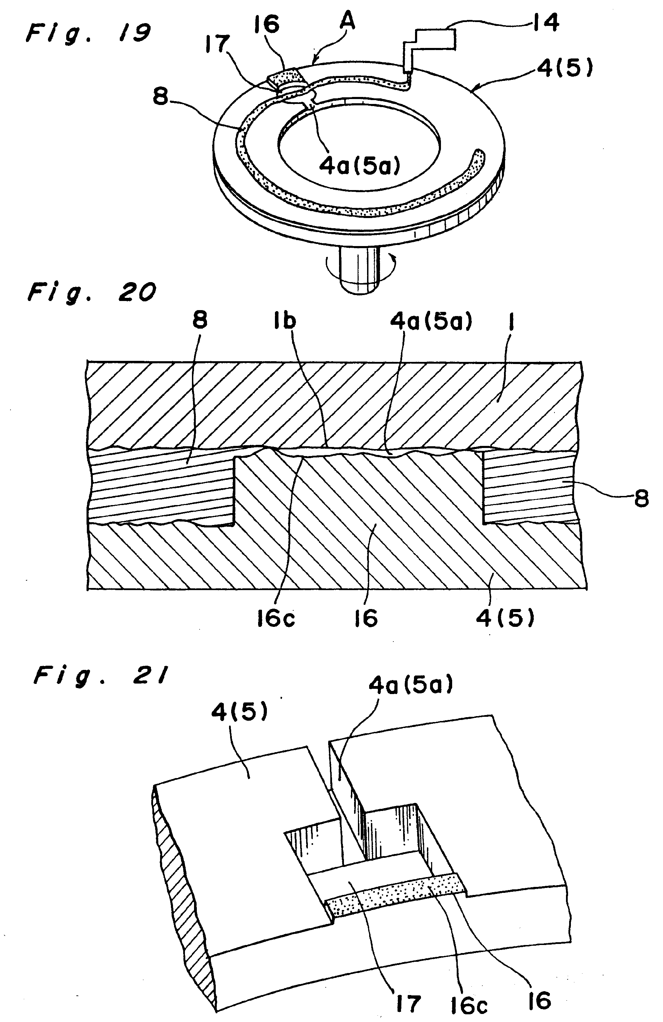

Figure 17 is a perspective view of a fifth preferred embodiment of a spacer used in an optical recording disc according to the present invention, and Figure 18 is an enlarged partial perspective view of portion A shown in Figure 17. According to Figures 17 and 18, there is provided a spacer 4 (5) which can be used as an inner spacer 4 or an outer spacer 5 and has a predetermined inner diameter and a predetermined outer diameter. The spacer 4 (5) of annular shape for example, is formed by an injection molding process from a synthetic resin material such as polycarbonate resin, acrylic resin, epoxy resin, vinyl chloride resin, or nylon resin etc..

A projecting portion 16 for facing the surface of the disc substrate 1 is formed on the surface of the spacer 4 (5) at the outer rim of said surface, whereby the outer end of the projecting portion 16 flushes with the peripheral outer surface of the spacer 4 (5), and the radial width w of the projecting portion 16 is less than the radial width W of the spacer 4 (5), which is the outer diameter minus the inner diameter. The upper surface 16c of the projecting portion 16 is roughened. The height h and the peripheral length l of the projecting portion 16, and the roughness of the rough surface 16c of the projecting portion 16 can be determined by taking into account the thickness of the bonding material 8 when the spacer 4 (5) is adhered to the disc substrate 1, the required air flow rate, the filtering of dust particles and the precision of the manufacturing process. In this case, when the spacer 4 (5) is bonded onto the disc substrate 1 with the bonding material 8 such as UV resin, epoxy resin, hotmelt etc., a bonding layer having a thickness of approximately 5 - 20 μm is generally formed. In this way, the projecting portion 16 of the spacer 4 (5), whose height h is approximately 5 - 20 μm, ensures that the spacer 4 (5) bonded onto the disc substrate 1 has its surface parallel to the opposite surface of the disc substrate 1.

If the intervals or distances between the top points of the rough surface 16c of the projecting portion 16, are less than 0.5 μm, the air flow rate through the ventilation path 4a (5a) is less than $2 \times 10^{-10}$ m3/sec at the air pressure 1 atm, and it becomes difficult for the outside air surrounding the optical recording disc to pass through the ventilation path 4a (5a) into the inner air chamber 6 of the optical recording disc, and it also becomes difficult to provide surface 16c with a uniform roughness pattern.

If the intervals between the top points of the rough surface 16c are more than 3 µm, dust particles having a length greater than 3 µm can enter into the inner air chamber 6 of the optical recording disc and can adhere to the recording layer 3 thereof, and it may then be difficult to record information correctly on said recording layer 3. Therefore, the rough surface 16c of the projecting portion 16 of the spacer 4 (5) is formed so that the intervals between the top points thereof preferably are in the range of 0.5 - 3 µm, and that the length 1 of the projecting portion 16 in the circumference direction is preferably in the range of 1 - 10 µm.

In Figures 17 and 18, a ventilation path 4a (5a) is cut into the inner rim portion of the spacer 4 (5) so that it extends from a bonding recess 17 to the inner peripheral surface of said spacer 4 (5).

The bonding recess 17 provided in spacer 4 (5) has for example a cylindrical shape whose diameter is bigger than the aforementioned length 1 of the projecting portion 16, and is located in the center portion of spacer 4 (5) between its inner rim and its outer rim and adjacent to the projecting portion 16. The bonding recess 17 is intended to receive during the coating step the bonding material 8 corresponding to the part which is applied onto the area where the bonding recess 17 is formed, when the bonding material 8 is distributed onto the surface of the rotating spacer 4 (5). The bonding recess 17 serves to prevent the rough surface 16c of the projecting portion 16 from being coated with the bonding material 8, when the bonding material 8 is expanded or spread out by pressing the spacer 4 (5) onto the surface of the disc substrate 1 after the coating step.

Referring to Figures 19 and 20, the process for bonding the spacer 4 (5) onto the surface of the disc substrate 1 will be described below with respect to a spacer 4 (5) used as an inner spacer 4.

First of all, as shown in Figure 19, the bonding material 8 is deposited in the shape of an annular belt or strip onto the surface of the inner spacer 4 by being supplied continuously in a predetermined quantity from a dispenser 14, onto the surface of the rotating inner spacer 4.

Next, as shown in Figure 20, the bonding material 8 is expanded or spread out by pressing the coated surface of the inner spacer 4 onto the surface 1b of the disc substrate 1 where the recording layer 3 is formed, so that the surface 1b faces the rough surface 16c of the projecting portion 16 of the spacer 4. The bonding material 8 cannot coat the rough surface 16c of the projecting portion 16, because while it is applied onto a spacer portion which is positioned a little bit nearer to the inner peripheral face of the spacer 4 than to the inner rim of the rough surface 16c of the projecting portion 16, it drops down into the bonding recess 17 and cannot be extended or spread over the rough surface 16c of the projecting portion 16 by pressing the spacer 4 onto the surface of the disc substrate 1. In this manner are obtained very small ventilation paths 4a which form a part of the global ventilation path, a part of which is cut out from spacer 4 (5) as shown in Figures 17, 18, 19 and 21 and whose width ranges from 0.5 - 3 µm and corresponds to that of the intervals situated between adjacent top points of the rough surface 16c of the projecting portion 16, these paths being formed between the surface 1b of the disc substrate 1, provided with the recording layer 3, and the rough surface 16c of the projecting portion 16 of said spacer 4.

Experiments have shown that the bonding material 8 should be extended or spread out so that the final thickness of the bonding material 8 is 5 - 20 µm and that its surface is located approximately at the same level as the geometric level of the rough surface 16a of the projecting portion 26. Thanks to this measure, an excessive interval between the surface 1b of the disc substrate 1 and the rough surface 16c of the projecting portion 16 cannot be formed, and, the inner spacer 4 cannot slant with respect to the disc substrate 1.

Then, an outer spacer 5 of annular shape but without any projecting portion 16 is bonded onto the outer rim portion of the disc substrates surface 1b on which the recording layer 3 is formed. Finally, a second disc substrate 1 is bonded onto the opposite surface of the inner and outer spacers 4 and 5, so that the recording layer 3 of the second disc substrate 1 faces the recording layer 3 of the first disc substrate 1, whereby the process for manufacturing the optical recording disc is completed.

In the aforementioned fifth preferred embodiment of the optical recording disc, the outside air surrounding the optical recording disc can pass through the ventilation paths 4a into the inner air chamber 6 of the optical recording disc, because the ventilation paths 4a are formed between the surface 1b of the disc substrate 1 and the rough surface 16c of the projecting portion 16 of the inner spacer 4. In this case, the ventilation paths 4a can prevent the dust particles from entering the inner air chamber 6 of the optical recording disc, because the width of the respective ventilation path 4a, through which the outside air passes, is very small and in the range of approximately 0.5 - 3 µm, and the outside dust particles are filtered by the ventilation paths 4a.

In the aforementioned fifth preferred embodiment, the projecting portion 16 is formed only on the surface of the inner spacer 4; however, the projecting portion 16 may be formed on the surface of the outer spacer 5 or may be formed on the surface of both the inner and outer spacers 4 and 5.

In the aforementioned fifth preferred embodiment, only one projecting portion 16 is formed on the surface of the inner spacer 4; however, any suitable number of the projecting portions 16 may be formed on the surface of the inner spacer 4 or/and the outer spacer 5. A plurality of the projecting portions 16 can facilitate the bonding operations of the two disc substrates 1 and the spacers 4 and 5 and provide a better stability during bonding than could be obtained with only a single projecting portion 16.

In the aforementioned fifth preferred embodiment, the projecting portion 16 is formed on the outer rim portion of the spacer 4 (5) and the bonding recess 17 of cylindrical shape is formed beside the projecting portion 16; however, the projecting portion 16 may be located anywhere on the surface of the spacer 4 (5) and the bonding recess 17 may have any shape, whose diameter or width is smaller than the width W of the spacer 4 (5) and may be located anywhere on the surface of the spacer 4 (5). For example, as shown in Figure 21, the projecting portion 16 may be formed on the inner rim portion of the spacer 4 (5) and the ventilation path 4a (5a) may be formed so that it extends from the bonding recess 17 to the outer peripheral face of the spacer 4 (5). The bonding recess 17 may have a rectangular shape on the surface of the spacer 4 (5).

In the aforementioned fifth preferred embodiment, the projecting portion 16, the ventilation path 4a (5a) and the bonding recess 17 are formed on the surface of the spacer 4 (5); however, the projecting portion 16, the ventilation path 4a (5a) and the bonding recess 17 may be formed on the surface of the disc substrate 1.

In the aforementioned fifth preferred embodiment, the bonding recess 17 is formed on the surface of the spacer 4 (5) beside the projecting portion 16; as mentioned before, the bonding recess 17 serves to prevent any coating of the surface of the spacer 4 (5) with bonding material 8 near the surface of the projecting portion 16. The bonding recess 17 may be omitted when the width of the ventilation path 4a (5a) is large enough to trap the bonding material 8 down, that is, to prevent the bonding material 8 from coating the aforementioned surface of the spacer 4 (5).

In the aforementioned fifth preferred embodiment, the disc substrate 1 is a piece distinct from the inner and outer spacers 4 and 5, which are bonded onto the surface of the disc substrate 1; however, annular shaped spacer portions may be formed on the inner rim and the outer rim of the surface of the disc substrates 1, instead of individual inner and outer spacers 4, 5.

## Claims

1. An optical recording disc comprising:
   two disc substrates (1,11) each in a cylindrical shape having a round centre hole (1a),
   at least one recording layer (3) formed on the inner surface of at least one of said disc substrates (1,11),
   an annular shaped inner spacer or inner rim portion (4,12) and an annular shaped outer spacer or outer rim portion (5,13) located between the inner rims and the outer rims respectively of said two disc substrates (1,11),
   at least one bonding material layer (8) formed either at an inner spacer or inner rim portion (4,12) and/or an outer spacer or outer rim portion (5,13) in front of the inner surface of said disc substrate, or at the inner surface of said disc substrates (1,11), whereby said bonding material layer (8) is provided to bond the said two disc substrates either together or to the corresponding inner and outer spacers so that the inner surfaces of said disc substrates face each other and together with said inner and outer spacers delimit an inner chamber (6), and
   a plurality of ventilation paths (4a,5a,12a,13a) provided between said two disc substrates (1,11) and establishing communication between the outside and the inner chamber (6) of said optical recording disc,
   characterized in that said ventilation paths (4a,5a,12a,13a) are formed at predetermined intervals by leaving gaps in the bonding material (8) and in that the thickness of said ventilation paths is in the range of 0.5 to 20 μm.

2. The optical recording disc as defined in claim 1, wherein the inner rim portion (12) and/or the outer rim portion (13) projects(s) from the inner surface of the disc substrate (11) towards the other disc substrate and is (are) made as one piece with the corresponding disc substrate (11).

3. The optical recording disc as defined in claim 1 or 2, wherein the inner rim portion (12) and/or the outer rim portion (13) of at least one side surface of the disc substrates (11), or the inner or outer spacer (4 or 5) bonded on the disc substrate (1) has a rough surface (4c,12c) and wherein the bonding material layer (8) is formed on said rough surface so that intervals free of said bonding material (8) are left on said rough surface, thereby forming said ventilation paths (4a,5a,12a,13a).

4. The optical recording disc as defined in claim 1 further comprising at least one portion (16) having a height h in the range of 5 to 20 μm and projecting from a face of the inner rim portion or spacer (4,12) and/or the outer rim portion or spacer (5,13) towards the inner surface of at least one disc substrate (1,11), and wherein the bonding material layer (8) is formed on the surface of said inner rim portion or spacer and/or of said outer rim portion or spacer so that an interval free of bonding material (8) is left on said surface in front of said projecting portion (16) and forms at least a part of said ventilation paths (4a,5a,12a,13a).

5. The optical recording disc according to claim 4, wherein said projecting portion (16) has a rough surface (16c) with a plurality of top points separated by intervals forming a part of said ventilation paths (4a,5a,12a,13a).

6. The optical recording disc as defined in any one of claims 3 to 5, wherein the interval between the top points of said rough surface (12c) corresponding to the roughness of the rough surface is in the range of 0.5 to 3 µm (micrometers).

7. The optical recording disc as defined in any one of claims 4 to 6, wherein a recess (17) is provided in the inner rim portion or spacer (4,12) and/or the outer rim portion or spacer (5,13), said recess (17) being adjacent to said projecting portion (16) and communicating with the inner lateral surface of said inner rim or spacer or said outer rim or spacer.

8. The optical recording disc as defined in any one of claims 4 to 7 wherein the thickness of the bonding material layer (8) is equal to the height h of the projecting portion (16).

9. The optical recording disc as defined in any one of claims 1 to 3, wherein the width of the ventilation path (4a,5a) is in the range of 3 to 15 mm.


**Patentansprüche**

1. Eine optische Aufnahmeplatte, mit:

zwei Plattenträgern (1, 11), von denen jeder eine zylindrische Gestalt mit einem runden Mittelloch (1a) besitzt,

wenigstens einer Aufnahmeschicht (3), die an der Innenseite wenigstens eines der Plattenträger (1, 11) ausgebildet ist,

einem ringförmigen inneren Abstandshalter oder inneren Randbereich (4, 12) und einem ringförmigen äußeren Abstandshalter oder äußeren Randbereich (5, 13), die zwischen den inneren Rändern bzw. zwischen den äußeren Rändern der zwei Plattenträger (1, 11) angeordnet sind,

wenigstens einer Klebstoffschicht (8), die entweder an einem inneren Abstandshalter oder inneren Randbereich (4, 12) und/oder einem äußeren Abstandshalter oder äußeren Randbereich (5, 13) gegenüber der Innenseite des Plattenträgers oder an der Innenseite der Plattenträger (1, 11) ausgebildet ist, wobei die Klebstoffschicht (8) dazu vorgesehen ist, die zwei Plattenträger entweder zusammenzukleben oder an die entsprechenden inneren und äußeren Abstandshalter zu kleben, so daß die Innenseite der Plattenträger einander zugewandt sind und zusammen mit den inneren und den äußeren Abstandshaltern eine Innenkammer (6) begrenzen, und

einer Mehrzahl von Belüftungswegen (4a, 5a, 12a, 13a), die zwischen den zwei Plattenträgern (1, 11) vorgesehen sind und zwischen dem Außenbereich und der Innenkammer (6) der optischen Aufnahmeplatte eine Verbindung herstellen,

dadurch gekennzeichnet, daß die Belüftungswege (4a, 5a, 12a, 13a) in vorgegebenen Abständen ausgebildet sind, indem im Klebstoff (8) Lücken gelassen werden, und daß die Dicke der Belüftungswege im Bereich zwischen 0,5 und 20 µm liegt.

2. Die optische Aufnahmeplatte gemäß Anspruch 1, wobei der innere Randbereich (12) und/oder der äußere Randbereich (13) von der Innenseite des Plattenträgers (11) zum anderen Plattenträger vorstehen (vorsteht) und einteilig mit dem entsprechenden Plattenträger (11) ausgebildet sind (ist).

3. Die optische Aufnahmeplatte gemäß Anspruch 1 oder 2, wobei der innere Randbereich (12) und/oder der äußere Randbereich (13) wenigstens einer Seitenfläche des Plattenträgers (11) oder der innere oder der äußere Abstandshalter (4 oder 5), der (die) am Plattenträger (1) angeklebt ist (sind), eine rauhe Oberfläche (4c, 12c) besitzt (besitzen) und wobei die Klebstoffschicht (8) auf der rauhen Oberfläche ausgebildet ist, so daß auf der rauhen Oberfläche Abschnitte, die frei von Klebstoff (8) sind, zurückbleiben, wodurch die Belüftungswege (4a, 5a, 12a, 13a) gebildet werden.

4. Die optische Aufnahmeplatte gemäß Anspruch 1, ferner umfassend wenigstens einen Bereich (16) mit einer Höhe h im Bereich zwischen 5 und 20 µm, der von einer Seite des inneren Randbereichs oder Abstandshalters (4, 12) und/oder des äußeren Randbereichs oder Abstandshalters (5, 13) zur Innenseite wenigstens eines Plattenträgers (1, 11) vorsteht, und wobei die Klebstoffschicht (8) auf der Oberfläche des inneren Randbereichs oder Abstandshalters und/oder des äußeren Randbereichs oder Abstandshalters ausgebildet ist, so daß auf der Oberfläche gegenüber dem vorspringenden Bereich (16) ein Abschnitt, der frei von Klebstoff (8) ist, zurückbleibt und wenigstens einen Teil der Belüftungswege (4a, 5a, 12a, 13a) bildet.

5. Die optische Aufnahmeplatte gemäß Anspruch 4, wobei der vorspringende Bereich (16) eine rauhe Oberfläche (16c) mit einer Mehrzahl von oberen Punkten besitzt, die durch Abschnitte getrennt sind, die einen Teil der Belüftungswege (4a, 5a, 12a, 13a) bilden.

6. Die optische Aufnahmeplatte gemäß einem der Ansprüche 3 bis 5, wobei der Abschnitt zwischen den oberen Punkten der rauhen Oberfläche (12c), die der Rauhheit der rauhen Oberfläche entsprechen, im Bereich zwischen 0,5 und 3 µm (Mikrometer) liegt.

7. Die optische Aufnahmeplatte gemäß einem der Ansprüche 4 bis 6, wobei im inneren Randbereich oder Abstandshalter (4, 12) und/oder im äußeren Randbereich oder Abstandshalter (5, 13) eine Aussparung (17) vorgesehen ist, die an den vorspringenden Bereich (16) angrenzt und mit der inneren Seitenfläche des inneren Randes oder Abstandshalters oder des äußeren Randes oder Abstandshalters in Verbindung steht.

8. Die optische Aufnahmeplatte gemäß einem der Ansprüche 4 bis 7, wobei die Dicke der Klebstoffschicht (8) gleich der Höhe h des vorspringenden Bereichs (16) ist.

9. Die optische Aufnahmeplatte gemäß einem der Ansprüche 1 bis 3, wobei die Breite des Belüftungsweges (4a, 5a) im Bereich zwischen 3 und 15 mm liegt.

## Revendications

1. Disque optique d'enregistrement comprenant :

deux substrats de disque (1, 11) de forme cylindrique comportant chacun un trou central rond (1a),

au moins une couche d'enregistrement (3) formée sur la surface interne d'au moins l'un desdits substrats de disque (1, 11),

une pièce d'écartement interne ou partie de rebord interne annulaire (4, 12) et une pièce d'écartement externe ou partie de rebord externe annulaire (5, 13) situées entre les rebords internes et les rebords externes respectivement desdits deux substrats de disque (1, 11),

au moins une couche de matière de liaison (8) formée sur une pièce d'écartement interne ou partie de rebord interne (4, 12) et/ou une pièce d'écartement externe ou partie de rebord externe (5, 13) en face de la surface interne dudit substrat de disque, ou sur la surface interne desdits substrats de disque (1, 11), ladite couche de matière de liaison (8) étant destinée à lier lesdits deux substrats de disque ensemble ou aux pièces d'écartement interne et externe correspondantes, de sorte que les surfaces internes desdits substrats de disque soient tournées l'une vers l'autre et délimitent avec lesdites pièces d'écartement interne et externe une chambre interne (6), et

une pluralité de passages de ventilation (4a, 5a, 12a, 13a) prévus entre lesdits deux substrats de disque (1, 11) et établissant une communication entre l'extérieur et la chambre interne (6) dudit disque optique d'enregistrement,

caractérisé en ce que lesdits passages de ventilation (4a, 5a, 12a, 13a) sont formés à des intervalles prédéterminés par le fait que des interstices sont formés dans la matière de liaison (8) et en ce que la hauteur desdits passages de ventilation est située dans la gamme de 0,5 à 20 µm.

2. Disque optique d'enregistrement selon la revendication 1, dans lequel la partie de rebord interne (12) et/ou la partie de rebord externe (13) fait ou font saillie(s) de la surface interne du substrat de disque (11) vers l'autre substrat de disque et est ou sont d'une pièce avec le substrat de disque (11) correspondant.

3. Disque optique d'enregistrement selon la revendication 1 ou 2, dans lequel la partie de rebord interne (12) et/ou la partie de rebord externe (13) d'au moins une surface latérale des substrats de disque (11), ou la pièce d'écartement interne ou externe (4 ou 5) fixée sur le substrat de disque (1) a une surface rugueuse (4c, 12c) et dans lequel la couche de matière de liaison (8) est formée sur ladite surface rugueuse, de sorte que des intervalles exempts de matière de liaison (8) sont formés sur ladite surface rugueuse pour former ainsi lesdits passages de ventilation (4a, 5a, 12a, 13a).

4. Disque optique d'enregistrement selon la revendication 1, comprenant en outre au moins une partie (16) ayant une hauteur h située dans la gamme de 5 à 20 µm et faisant saillie depuis une face de la partie de rebord interne ou pièce d'écartement interne (4, 12) et/ou de la partie de rebord externe ou pièce d'écartement externe (5, 13) en direction de la surface interne d'au moins un substrat de disque (1, 11), et dans lequel la couche de matière de liaison (8) est formée sur la surface de ladite partie de rebord interne ou pièce d'écartement interne et/ou de ladite partie de rebord externe ou pièce d'écartement externe, de sorte qu'un intervalle exempt de matière de liaison (8) est formé sur ladite surface en face de ladite partie en saillie (16) et forme au moins une partie desdits passages de ventilation (4a, 5a, 12a, 13a).

5. Disque optique d'enregistrement selon la revendication 4, dans lequel ladite partie en saillie (16) a une surface rugueuse (16c) comportant une pluralité de points supérieurs séparés par des intervalles formant une partie desdits passages de ventilation (4a, 5a, 12a, 13a).

6. Disque optique d'enregistrement selon l'une quelconque des revendications 3 à 5, dans lequel intervale entre les points supérieurs de ladite surface rugueuse (12c) correspondant à la rugosité de la surface rugueuse est compris dans la gamme de 0,5 à 3 µm (micromètres).

7. Disque optique d'enregistrement selon l'une quelconque des revendications 4 à 6, dans lequel un évidement (17) est prévu dans la partie de rebord interne ou pièce d'écartement interne (4, 12) et/ou dans la partie de rebord externe ou pièce d'écartement externe (5, 13), ledit évidement (17) étant adjacent à ladite partie en saillie (16) et communiquant avec la surface latérale interne dudit rebord interne ou pièce d'écartement interne ou dudit rebord externe ou pièce d'écartement externe.

8. Disque optique d'enregistrement selon l'une quelconque des revendications 4 à 7, dans lequel l'épaisseur de la couche de matière de liaison (8) est égale à la hauteur h de la partie en saillie (16).

9. Disque optique d'enregistrement selon l'une quelconque des revendications 1 à 3, dans lequel la largeur du passage de ventilation (4a, 5a) est située dans la gamme de 3 à 15 mm.

Fig. 1

Fig. 2

Fig. 3

Fig. 4

Fig. 5

Fig. 6

Fig. 7

*Fig. 8*

*Fig. 9*

*Fig. 10*

Fig. 11

Fig. 12

Fig. 13

Fig. 14

Fig. 15

Fig. 16

Fig. 17

Fig. 18

**Fig. 19**

**Fig. 20**

**Fig. 21**

18